# EUROPÄISCHE PATENTSCHRIFT

(11) **EP 0 515 946 B1**
(45) Veröffentlichungstag und Bekanntmachung des Hinweises auf die Patenterteilung: **14.06.1995**
(21) Anmeldenummer: 92108392.9
(22) Anmeldetag: 19.05.1992
(51) Int. Cl.: D01G 11/00, D06N 7/00

(54) **Verfahren zum Aufarbeiten von Kunststoff beschichteten textilen Stoffen sowie Anlage zur Durchführung des Verfahrens**
Method for working up textile material coated with plastic as well as installation for carrying it out
Procédé d'élaboration de matière textile revêtue d'un produit artificiel ainsi que l'installation pour la mise en oeuvre de ce procédé

(30) Priorität: 31.05.1991 DE 4117931; 26.06.1991 DE 4121024
(43) Veröffentlichungstag der Anmeldung: 02.12.1992
(73) Patentinhaber: Firma ING. JÜRGEN RÜMMER, MASCHINENBAU, KONSTRUKTION, ELEKTROTECHNIK, D-96120 Bischberg (DE)
(72) Erfinder: Rümmer, Jürgen, W-8609 Bischberg (DE)
(74) Vertreter: Tergau, Enno, Dipl.-Ing.

(56) Entgegenhaltungen:
- DE-A- 2 520 913
- DE-B- 1 256 118
- GB-A- 2 142 351
- PATENT ABSTRACTS OF JAPAN vol. 10, no. 36 (C-328)13. Februar 1986,& JP-A-60185823(Hayashi Terenpu KK) 21.September 1985

## Beschreibung

Die Erfindung betrifft ein Verfahren zum Aufarbeiten von Kunststoff-beschichteten textilen Stoffen, insbesondere von Kunststoff-hinterlegten textilen Bodenbelägen und zum Wiedergewinnen der darin enthaltenen Textilfasern und Kunststoffe. Die Erfindung betrifft des weiteren eine Anlage zur Durchführung dieses Verfahrens.

Textile Bodenbeläge, deren Rückseite mit Kunststoff hinterlegt ist, werden beispielsweise als Teppichböden in Wohnungen, Büros und anderen Gebäuden verwendet. Sie finden auch weitverbreiteten Gebrauch in Kraftfahrzeugen, insbesondere Personenkraftwagen, aber auch Omnibussen und anderen öffentlichen Verkehrsmitteln. Infolge der immer strenger werdenden Umwelt-Schutzbestimmungen werden häufig die Hersteller oder Händler derartiger Bodenbeläge verpflichtet, bei Neukauf eines entsprechenden Artikels die alten Beläge zurückzunehmen. Außerdem fallen beträchtliche Mengen noch ungebrauchter Beläge als Randabschnitte, Verschnittstreifen u.dgl. bei der Produktion solcher Bodenbeläge an. In jedem Falle besteht die Aufgabe, die vorhandenen Abfallstücke wieder aufzuarbeiten und dabei nach Möglichkeit die wertvollen textilen Fasern sowie auch den zum Hinterlegen der Beläge verwendeten Kunststoff wiederzugewinnen.

Textile Bodenbeläge der beschriebenen Art sind jedoch nicht die einzigen Textil-Kunststoff-Verbundstoffe, für die die Aufgabe der Wiederaufbereitung besteht. Auch bei Kunststoff-beschichteten Planen und Decken liegt diese Aufgabe vor. In der Vergangenheit war es in solchen Fällen einfach üblich, die anfallenden Reste zu verbrennen, wodurch aber einerseits die Umwelt in erheblichem Maße belastet wird und wodurch andererseits wertvolle Rohstoffe vernichtet werden.

Aus der DE-OS 25 20 913 ist ein Verfahren zur Rückgewinnung der Fasern aus Teppichbodenabfällen bekannt, bei dem die Teppichbodenabfälle gegebenenfalls nach vorheriger Zerkleinerung in flüssigem Stickstoff unterkühlt, anschließend zerkleinert und die Fasern von der zerkleinerten Masse getrennt werden. Nachteilig bei diesem bekannten Verfahren ist vor allen Dingen der hohe Energieaufwand zur Herstellung des flüssigen Stickstoffs.

Davon ausgehend ist die Aufgabe der Erfindung, ein Verfahren bzw. eine Vorrichtung vorzuschlagen, welches mit geringerem Energieaufwand arbeitet. Diese Aufgabe wird durch die Merkmale des kennzeichenden Teils des Anspruchs 1 bzw. 5 gelöst.

Bei entsprechenden Versuchen wurde beobachtet, daß bei einer derartigen Behandlung eine praktisch vollständige Trennung der Kunststoffteilchen von den Fasern eintritt und sich der Kunststoff zu kleinen Granulatpartikeln zusammenlagert. Die textilen Fasern liegen nach der Behandlung vom Kunststoff befreit in der wässrigen Aufschlemmung vor, so daß es möglich ist, die beiden Bestandteile nach dem Entwässern und Trocknen der Pulpe, also des Mahlgutes, voneinander zu trennen. Eine derartige Trennung läßt sich auf verschiedene Weise durchführen, beispielsweise durch mechanisches Schlagen der Mischung (ähnlich wie beim Dreschen), aber auch durch Rütteln auf Sieben oder durch Beblasen mit Luft.

Um die aufzuarbeitenden Stoffe in eine Form zu bringen, welche die Bearbeitung in Zerkleinerungsmaschinen, also Mühlen, unter Bildung einer Pulpe möglich macht, ist es erforderlich, diese zunächst in kleine Schnitzel zu zerteilen, wobei die Schnitzel eine Größe haben sollten, die geeignet ist, mit Wasser zu einer pumpbaren Mischung angerührt zu werden. Bei praktischen Versuchen hat sich eine Schnitzelgröße von 5 x 5 bis 10 x 10 mm² bewährt. Diese Größe wird hier vorzugsweise empfohlen, obgleich die Durchführung des Verfahrens nicht streng an diese Größe gebunden ist.

Die Schnitzel werden dann im nächsten Arbeitsgang in einer Mühle unter Bildung einer Pulpe weiter zerkleinert. Als Mühle haben sich hier in der Papierindustrie bekannte Einrichtungen, wie Scheiben-Refiner oder Kegelmühlen, bewährt. Diese Mühlen arbeiten mit einer hinreichenden Geschwindigkeit, um wirtschaftlich zu sein; andererseits übertragen sie aber auch nicht mehr Energie auf das Mahlgut, als zur Bearbeitung unerläßlich ist. Insbesondere die textilen Fasern werden bei der Behandlung in diesen Mühlen weitgehend geschont, wobei der Grad der Bearbeitung durch Variation des Mahlspaltes einstellbar ist.

Die als Mahlgut anfallende Pulpe wird alsdann entwässert und schließlich völlig getrocknet. Das dann vorliegende Gemisch aus textilen Fasern und Kunststoffgranulat läßt sich - wie gesagt - durch Klopfen und Beblasen in Fasern und Granulatteilchen auftrennen. Sowohl die Fasern wie auch die Granulatteilchen sind wiederverwendbar. Die Fasern können beispielsweise zu groben Garnen verarbeitet werden, welche wiederum zur Herstellung von Bodenbelägen, aber auch von Putzlappen und ähnlichem eingesetzt werden können. Die Granulatteilchen können in bekannter Weise in Extrudern aufgeschmolzen und wieder zu Beschichtungen eingesetzt werden. Wie in der Kunststoffindustrie üblich, sollten dabei nicht Recyclat-Granulate allein verarbeitet werden, sondern diese Recyclate sollten in Mengen von 20 bis 40 % Frischgranulaten zugesetzt werden, um am Ende Kunststoffe mit gewünschten Güteeigenschaften zu erhalten.

Einfacher ist es allerdings, die Granulatteilchen in beheizten Mischbehältern oder beheizten Rührwerken aufzuarbeiten.

Sofern die Fasern aus spinnbaren Kunststoffen, insbesondere Polyamid, bestehen, können diese - nachdem die Rückenbestandteile abgetrennt sind - wieder versponnen werden. Der Vorteil liegt darin, daß für die Wiederverwertung wiederum neues unvermischtes Polyamid (bzw. ein anderer spinnbarer Kunststoff) vorliegt, aus welchem wieder hochwertige Garne erzeugt werden können.

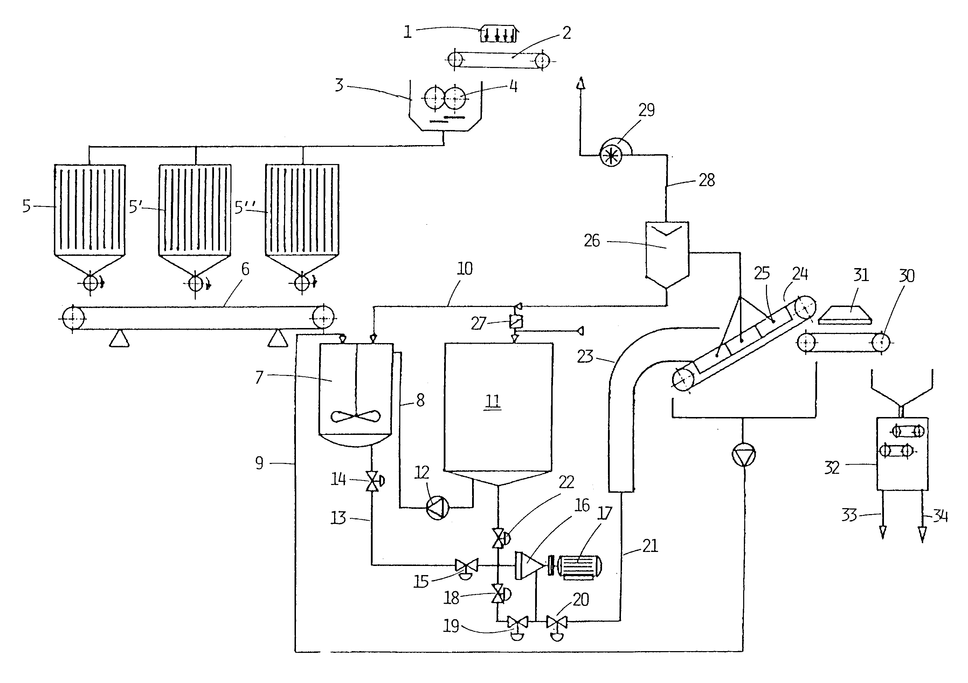

Die Erfindung betrifft auch eine Anlage zur Durchführung des Verfahrens. Diese Anlage wird im folgenden unter Bezugnahme auf die beigefügte Zeichnung näher erläutert. In der Zeichnung ist ein schematisches Schaubild der Anlage wiedergegeben. Die nachfolgende Beschreibung richtet sich nach dem Materialfluß der aufzuarbeitenden Werkstoffe.

Die aufzuarbeitenden Teppichabschnitte werden zunächst über einen Magnetabscheider 1 einem Zuführ-Förderband 2 übergeben. Der Magnetabscheider entnimmt dem aufzuarbeitenden Material alle magnetisierbaren Metallteile und schützt so die nachgeordneten Zerkleinerungseinrichtungen vor Beschädigung.

Vom Förderband 2 gelangen die Teile in eine Zerschnitzelungs-Einrichtung 3, die mit Längs- und Querschneidern 4 ausgerüstet ist. In dieser Einrichtung werden die zunächst flächenhaften Teppichstücke in kleine Schnitzel zerlegt, welche eine Größe haben, die für die Weiterverarbeitung geeignet ist. Die Größe beträgt vorteilhafterweise 5 x 5 ... 10 x 10 mm². Die so erzeugten Schnitzel gelangen nun über nicht näher dargestellte Fördermittel in Zwischenbehälter 5,5',5''. In der Zeichnung sind drei derartige Zwischenbehälter angedeutet; die genaue Anzahl richtet sich naturgemäß nach der Größe der Anlage und ist nicht kritisch.

Aus den Zwischenbehältern können die Schnitzel nach Belieben entnommen werden, wobei sie auf eine nachgeordnete Dosier- und Transportanlage 6 gelangen. Mit Hilfe dieser Einrichtung wird eine vorbestimmte Menge einem Rührbehälter 7 zugeleitet. Der Rührbehälter wird außerdem noch über die Leitungen 8,9 und 10 mit Wasser versorgt. Die Wasserleitung 8 steht dabei mit einem Wasservorratsbehälter 11 in Verbindung, wobei sie über eine Dosierpumpe 12 gespeist werden kann.

Im Rührbehälter 7 entsteht auf diese Weise eine nach exakter Rezeptur zusammengesetzte Wasser-Schnitzel-Mischung. Diese Mischung wird über eine entsprechend dimensionierte Leitung 13 und über Absperrventile 14 und 15 der Mühle 16, beispielsweise einem Scheiben- oder Kegel-Refiner zugeführt. Diese Mühle wird mit Hilfe des Elektromotors 17 angetrieben und zerkleinert dabei die zugeführten Schnitzel so weit, daß sie zusammen mit dem als Fördermittel dienenden Wasser eine Pulpe bilden. Die Pulpe kann dabei je nach Notwendigkeit über die Ventile 18 und 19 beliebig lange im Kreis geführt oder auch über das Ventil 20 und die nachgeordnete Leitung 21 aus dem Kreislauf abgeleitet werden. Erforderlichenfalls kann Wasser aus dem Behälter 11 über das Ventil 22 zugesetzt werden. Je nach Beschaffenheit der zu zerkleinernden Werkstoffe kann eine längere Mahldauer erforderlich sein, wobei die Schnitzel-Wasser-Mischung bzw. die daraus entstehende Pulpe im Kreis geführt werden muß. In solchen Fällen kann es nützlich sein, im Kreislauf noch einen Zwischenbehälter, der in der Zeichnung nicht dargestellt ist, vorzusehen.

Die schließlich über die Leitung 21 austretende fertige Pulpe gelangt über den Stoffauflauf 23 zu einer Siebvorrichtung 24. In der Zeichnung ist hierzu eine Langsiebeinrichtung mit Saugkästen 25 dargestellt. Anstelle dieser Langsiebvorrichtung kann auch eine Rundsieb-Entwässerungsmaschine eingesetzt werden.

Das über die Saugkästen 25 abgesaugte Wasser gelangt über einen Abscheider 26 zur Leitung 10, die das gereinigte Wasser wahlweise dem Rührbehälter 7 oder dem Wasserbehälter 11 zuleitet. Ist letzteres der Fall, kann noch ein Filter 27 zwischengeschaltet werden. Die im Abscheider anfallende Luft wird über die Leitung 28 und den Exhaustor 29 ins Freie geführt.

Das entwässerte Mahlgut gelangt von der Siebvorrichtung 24 auf den Trockner 30, der in der Zeichnung als Bandtrockner mit Absaughaube 31 dargestellt ist. Anstelle des Bandtrockners kann auch ein Trommeltrockner mit Vorteil eingesetzt werden.

Das Trockengut, welches nunmehr aus einer Mischung aus textilen Fasern und Kunststoffgranulat besteht, gelangt schließlich in die Trenneinrichtung 32, in der die Fasern vom Granulat abgetrennt und über Leitungen 33 und 34 getrennt nach außen geführt werden.

Vom Wasserbehälter 11 aus kann der Naßteil der Anlage durchspült werden. Dadurch kann sichergestellt werden, daß Fasern verschiedener Zusammensetzung oder Fasern, die nacheinander verarbeitet werden sollen, nicht miteinander vermischt werden.

### Bezugszeichenliste

- 1: Magnetabscheider
- 2: Förderband
- 3: Zerschnitzelungs-Einrichtung
- 4: Längs- u. Querschneider
- 5: Zwischenbehälter
- 6: Dosier- und Transport-Einrichtung
- 7: Rührbehälter
- 8: Wasserleitung
- 9: Wasserleitung
- 10: Wasserleitung
- 11: Wasserbehälter
- 12: Dosierpumpe
- 13: Leitung
- 14: Absperrventil
- 15: Absperrventil
- 16: Mühle
- 17: E-Motor
- 18: Ventil
- 19: Ventil
- 20: Ventil
- 21: Leitung
- 22: Ventil
- 23: Stoffauflauf
- 24: Sieb-Vorrichtung
- 25: Saugkasten
- 26: Abscheider
- 27: Filter
- 28: Leitung
- 29: Exhaustor
- 30: Trockner
- 31: Absaughaube
- 32: Trenneinrichtung
- 33: Leitung
- 34: Leitung

## Patentansprüche

1. Verfahren zum Aufarbeiten von Kunststoff-beschichteten textilen Stoffen, insbesondere von Kunststoff-hinterlegten textilen Bodenbelägen und zum Wiedergewinnen der darin enthaltenen Textilfasern und Kunststoffe, wobei die aufzuarbeitenden Stoffe in kleine Schnitzel zerschnitten werden,
gekennzeichnet durch folgende Verfahrensschritte:
- Vermischen der Schnitzel mit Wasser unter Bildung einer pumpfähigen Masse,
- Zerkleinern der Schnitzel in einer Mühle (16) unter Bildung einer Pulpe;
- Entwässern und Trocknen der Pulpe;
- mechanisches Trennen der Fasern vom entstandenen Kunststoffgranulat.

2. Verfahren nach Anspruch 1,
dadurch gekennzeichnet,
daß die aufzuarbeitenden Stoffe auf eine Schnitzelgröße von 5 x 5 ... 10 x 10 mm² zerschnitten werden.

3. Verfahren nach Anspruch 1 oder 2,
dadurch gekennzeichnet,
daß die Schnitzel in einer Scheiben- oder Kegelmühle (16) zerkleinert werden.

4. Verfahren nach einem der vorstehenden Ansprüche,
dadurch gekennzeichnet,
daß das getrocknete Mahlgut durch Klopfen und Beblasen in Fasern und Kunststoffgranulat getrennt wird.

5. Anlage zur Durchführung des Verfahrens nach Anspruch 1 mit jeweils wenigstens einer Zerschnitzelungseinrichtung (3), einer Siebvorrichtung (24) und einer Trennvorrichtung (32),
gekennzeichnet durch folgende Baugruppen:
- einer aus Längs- und Querschneidern (4) bestehenden Zerschnitzelungseinrichtung (3) für die aufzuarbeitenden Stoffe;
- wenigstens einem Zwischenlager (5) für die Schnitzel mit nachgeordneter Dosier- und Transporteinrichtung (6);
- wenigstens einem Rührbehälter (7) für die Herstellung der Schnitzel-Aufschwemmung;
- wenigstens einer Mühle (16) für die Umwandlung der Schnitzel-Aufschwemmung in eine Pulpe;
- wenigstens einer Siebvorrichtung (24) mit nachgeordnetem Trockner (30);
- wenigstens einer mechanischen Trennvorrichtung (32) für die Trennung der Fasern vom entstandenen Kunststoffgranulat,
wobei die Baugruppen Rührbehälter (7), Mühle (16) und Siebvorrichtung (24) durch absperrbare Flüssigkeitsleitungen (13,21,9) miteinander verbunden sind.

6. Anlage nach Anspruch 5,
dadurch gekennzeichnet,
daß die Mühle (16) ein Kegel- oder Scheiben-Refiner ist.

7. Anlage nach Anspruch 5 oder 6,
dadurch gekennzeichnet,
daß die Siebvorichtung (24) eine Langsiebvorrichtung mit zugeordneten Saugkästen (25) ist.

8. Anlage nach Anspruch 5 oder 6,
dadurch gekennzeichnet,
daß die Siebvorrichtung (24) eine Rundsieb-Entwässerungsmaschine ist.

9. Anlage nach Anspruch 5,6,7 oder 8,
dadurch gekennzeichnet,
daß der Trockner (30) ein warmluftbeheizter Bandtrockner ist.

10. Anlage nach einem der Ansprüche 5 bis 9,
dadurch gekennzeichnet,
daß die Saugkästen (25) der Siebvorrichtung (24) über einen Abscheider (26) mit dem Rührbehälter (7) und/oder dem Wasserbehälter (11) über eine Leitung (10) verbunden sind und die Entlüftungsseite des Abscheiders über einen Exhaustor (29) ins Freie geführt ist.

## Claims

1. A method for reprocessing textile materials coated with plastic, in particular plastic-backed textile floor coverings, and for recovering the textile fibres and plastic materials contained therein, in which process the materials to be reprocessed are cut up into small shreds,
characterized by the following steps of the method:
- mixing the shreds with water, with the formation of a pumpable mass;
- reducing the size of the shreds in a grinder (16), with the formation of a pulp;
- draining the water and drying the pulp;
- mechanically separating the fibres from the plastic granular material obtained.

2. A method according to claim 1,
characterized in that
the materials to be reprocessed are cut up to a shred size of 5 x 5 ... 10 x 10 mm².

3. A method according to claim 1 or 2,
characterized in that
the shreds are reduced in size in a disk grinder or conical grinder (16).

4. A method according to one of the preceding claims,
characterized in that
the dried ground material is separated into fibres and plastic granular material by beating and blasting.

5. An installation for operating the method according to claim 1 with respectively at least one shredding device (3), a strainer device (24) and a separating device (32),
characterized by
the following component units:
- a shredding device (3) consisting of longitudinal and transverse cutters (4) for the materials to be reprocessed;
- at least one intermediate storage means (5) for the shreds, with a metering and conveyor device (6) disposed down the line;
- at least one stirrer tank (7) for producing the floated shredded mass;
- at least one grinder (16) for converting the floated shredded mass into a pulp;
- at least one strainer device (24) with a dryer (30) disposed down the line;
- at least one mechanical separating device (32) for the separation of the fibres from the plastic granular material obtained,
in which arrangement the component units of the stirrer tank (7), grinder (16) and strainer device (24) are connected to each other by pipes (13, 21, 9) for the liquid which can be closed.

6. An installation according to claim 5,
characterized in that
the grinder (16) is a conical refiner or disk refiner.

7. An installation according to claim 5 or 6,
characterized in that
the strainer device (24) is a long-life device with associated suction boxes (25).

8. An installation according to claim 5 or 6,
characterized in that
the strainer device (24) is a sieve-drum water draining machine.

9. An installation according to claims 5, 6, 7 or 8,
characterized in that
the dryer (30) is a belt dryer heated by hot air.

10. An installation according to one of claims 5 to 9,
characterized in that
the suction boxes (25) of the strainer device (24) are carried via a separator (26) to the stirrer container (7) and/or the water tank (11), and the evacuating side of the separator is carried into the atmosphere via an extractor fan (29).

## Revendications

1. Procédé de retraitement d'étoffes textiles enduites de matières plastiques, notamment de revêtements de sol textiles doublés de matières plastiques, et de récupération des fibres textiles et des matières plastiques qu'elles contiennent, les étoffes à retraiter étant coupées en petites rognures, caractérisé par les étapes de procédé suivantes :
- mélange des rognures avec de l'eau, avec formation d'une masse susceptible de pompage,
- broyage des rognures dans un broyeur (16) avec formation d'une pâte,
- déshydratation et séchage de la pâte,
- séparation mécanique des fibres du granulat de matières plastiques formé.

2. Procédé selon la revendication 1, caractérisé en ce que les étoffes à retraiter sont coupées en rognures de dimensions comprises entre 5 x 5 et 10 x 10 mm².

3. Procédé selon la revendication 1 ou 2, caractérisé en ce que les rognures sont broyées dans un broyeur conique ou à disques (16).

4. Procédé selon une des revendications précédentes, caractérisé en ce que la mouture séchée est séparée par martèlement et soufflage en fibres et granulat de matières plastiques.

5. Installation de mise en oeuvre du procédé selon la revendication 1, comportant au moins un dispositif de découpage en rognures (3), un dispositif de tamisage (24) et un dispositif de séparation (32), caractérisée par les sous-groupes suivants :
- un dispositif de découpage en rognures (3) des étoffes à retraiter, composé de coupeurs longitudinaux et transversaux (4),
- au moins un magasin intermédiaire (5) pour les rognures, à dispositif de dosage et de transport (6) subordonné,
- au moins un mélangeur-brasseur (7) pour la préparation de la suspension de rognures,
- au moins un broyeur (16) pour la transformation de la suspension de rognures en une pâte,
- au moins un dispositif de tamisage (24) à séchoir (30) subordonné,
- au moins un dispositif de séparation mécanique (32) pour la séparation des fibres du granulat de matières plastiques formé,
les sous-groupes mélangeur-brasseur (7), broyeur (16) et dispositif de tamisage (24) étant reliés entre eux par des conduits de liquide (13, 21, 9) obturables.

6. Installation selon la revendication 5, caractérisée en ce que le broyeur (16) est un raffineur conique ou à disques.

7. Installation selon la revendication 5 ou 6, caractérisée en ce que le dispositif de tamisage (24) est un dispositif à forme longitudinale à caisses aspirantes (25) coordonnées.

8. Installation selon la revendication 5 ou 6, caractérisée en ce que le dispositif de tamisage (24) est une machine à sucer à forme ronde.

9. Installation selon la revendication 5, 6, 7 ou 8, caractérisée en ce que le séchoir (30) est un séchoir à bande chauffé à l'air chaud.

10. Installation selon une des revendications 5 à 9, caractérisée en ce que les caisses aspirantes (25) du dispositif de tamisage (24) sont reliées par l'intermédiaire d'un séparateur (26) avec le mélangeur-brasseur (7) et/ou le réservoir d'eau (11) par un conduit (10) et le côté aération du séparateur mène à l'air libre par l'intermédiaire d'un exhausteur (29).
